# EUROPÄISCHE PATENTANMELDUNG

(11) **EP 3 690 259 A1**
(43) Veröffentlichungstag der Anmeldung: **05.08.2020**
(21) Anmeldenummer: 19203052.6
(22) Anmeldetag: 14.10.2019
(51) Int. Cl.: F15B 13/042, F15B 13/02, F16K 17/10, A01D 34/00

(54) **ABSCHALTVENTIL FÜR EIN HYDRAULISCH ANGETRIEBENES ANBAUGERÄT SOWIE ANBAUGERÄT FÜR EINE LANDWIRTSCHAFTLICHE ARBEITSMASCHINE**

(30) Priorität: 31.01.2019 DE 102019102416
(71) Anmelder: CLAAS Industrietechnik GmbH, 33106 Paderborn (DE)
(72) Erfinder: Berkemann, Stephan, 32660 Detmold (DE); Schlichting, Dirk, 33014 Bad Driburg (DE)
(74) Vertreter: CLAAS Gruppe

(57) **Zusammenfassung**

Die vorliegende Erfindung betrifft ein Abschaltventil (5) für ein hydraulisch angetriebenes Anbaugerät einer landwirtschaftlichen Arbeitsmaschine, wobei das Abschaltventil (5) in einem Hydraulikkreislauf (1) zwischen zumindest einer Hydraulikpumpe (2) und zumindest einem das Anbaugerät antreibenden Hydraulikmotor (4) angeordnet ist, wobei das Abschaltventil (5) einen Steuerschieber (11) umfasst, der durch einen Kraftspeicher, insbesondere eine Druckfeder (13), in einer Position gehalten ist, in der ein Pumpenanschluss (7) und ein Tankanschluss (8) getrennt sind, wobei das Absperrventil (5) ansteuerbar ist, um den Hydraulikkreislauf (1) bei Bedarf kurzzuschließen, wobei das Abschaltventil (5) ein Vorspannventil (10) und ein, insbesondere separates, Druckbegrenzungsventil (9) aufweist, wobei das Abschaltventil (5) über das Druckbegrenzungsventil (9) vorsteuerbar ist und mittels des Vorspannventils (10) in einer geöffneten Position haltbar ist.

## Beschreibung

Die vorliegende Erfindung betrifft ein Abschaltventil für ein hydraulisch angetriebenes Anbaugerät gemäß dem Oberbegriff des Anspruches 1. Weiterhin betrifft die Erfindung ein Anbaugerät für eine landwirtschaftliche Arbeitsmaschine gemäß dem Anspruch 9.

Ein Abschaltventil für ein hydraulisch angetriebenes Anbaugerät einer landwirtschaftlichen Arbeitsmaschine, wobei das Abschaltventil in einem Hydraulikkreislauf zwischen einer Hydraulikpumpe und einem das Anbaugerät antreibenden Hydraulikmotor angeordnet ist, wobei das Abschaltventil einen Steuerschieber umfasst, der durch einen Kraftspeicher, insbesondere eine Druckfeder, in einer Position gehalten ist, in der ein Pumpenanschluss und ein Tankanschluss getrennt sind, wobei das Absperrventil ansteuerbar ist, um den Hydraulikkreislauf bei Bedarf kurzzuschließen. Das Abschaltventil dient unter anderem der Absicherung einer Überlast im Hydraulikkreislauf. Eine weitere Funktion des Abschaltventiles besteht darin, einen drucklosen Umlauf in dem Hydraulikkreislauf zu ermöglichen, wenn hydraulisch angetriebene Komponenten, die lösbar an dem Anbaugerät angeordnet sind, demontiert wurden.

So ist es bekannt, hierfür ein zweistufiges Druckbegrenzungsventil einzusetzen. Ausgehend von einem geschlossenen Zustand des Druckbegrenzungsventils führt ein Anstieg des Druckes auf am Pumpenanschluss aufgrund einer Überlast dazu, dass ein Steuerschieber des Druckbegrenzungsventils gegen die Kraft einer Druckfeder in eine erste Position überführt wird, in welcher eine Steuerkante des Steuerschiebers eine Verbindung zwischen dem Pumpenanschluss und einem vom Steuerschieber bis dahin verschlossenen Druckraum öffnet. Überschreitet der Druck einen Grenzwert, so schaltet in einer zweiten Stufe das Druckbegrenzungsventil derart, dass der Pumpenanschluss und der Tankanschluss miteinander verbunden sind. Während des Betriebes im Hydraulikkreislauf auftretende Laständerungen führen dazu, dass es aufgrund der Funktions- und Bauweise des zweistufigen Druckbegrenzungsventils zu einer unerwünschten, starken Erwärmung des Hydraulikfluides kommt.

Aus der EP 2 647 276 A1 ist ein Anbaugerät für eine landwirtschaftliche Arbeitsmaschine bekannt, welches als ein an einem Mähdrescher angeordnetes Schneidwerk ausgeführt ist. Das Schneidwerk ist mit einer hydraulisch angetriebenen, sich im Wesentlichen über die Breite des Schneidwerkes erstreckenden Mähvorrichtung ausgeführt, an welcher seitlich Trennmesser anbringbar sind, welche in im Wesentlichen vertikaler Richtung zur Mähvorrichtung orientiert sind. Zum Antreiben der Mähvorrichtung und der optionalen Trennmesser ist eine Hydraulikpumpe vorgesehen, die Hydromotoren antreibt. Bei abgebauten Trennmessern oder bei einer Überlast im Falle einer Störung wird ein druckloser Umlauf mittels eines Druckbegrenzungsventils erzeugt. Nachteilig ist jedoch, dass es bei Druckbegrenzungsventilen zu Schwingungen im hydraulischen System kommen kann.

Der vorliegenden Erfindung liegt daher die Aufgabe zugrunde, ein Abschaltventil für ein hydraulisch angetriebenes Anbaugerät sowie ein Anbaugerät für eine landwirtschaftliche Arbeitsmaschine bereitzustellen, welche die Nachteile des Standes der Technik vermeiden.

Diese Aufgabe wird erfindungsgemäß durch ein Abschaltventil mit den Merkmalen des Anspruches 1 gelöst. Weiterhin wird diese Aufgabe durch ein Anbaugerät mit den Merkmalen des Anspruches 9 gelöst.

Gemäß Anspruch 1 wird ein Abschaltventil für ein hydraulisch angetriebenes Anbaugerät einer landwirtschaftlichen Arbeitsmaschine vorgeschlagen, wobei das Abschaltventil in einem Hydraulikkreislauf zwischen zumindest einer Hydraulikpumpe und zumindest einem das Anbaugerät antreibenden Hydraulikmotor angeordnet ist. Das Abschaltventil umfasst einen Steuerschieber, der durch einen Kraftspeicher, insbesondere eine Druckfeder, in einer Position gehalten ist, in der ein Pumpenanschluss und ein Tankanschluss am Abschaltventil getrennt sind. Das Absperrventil ist ansteuerbar, um den Hydraulikkreislauf bei Bedarf kurzzuschließen. Erfindungsgemäß ist vorgesehen, dass das Abschaltventil ein Vorspannventil und ein, insbesondere separates, Druckbegrenzungsventil aufweist, wobei der Steuerschieber des Abschaltventils über das Druckbegrenzungsventil vorsteuerbar ist und der Steuerschieber mittels des Vorspannventils in einer geöffneten Position haltbar ist. Durch das vorangesteuerte Verschieben des Steuerschiebers wird eine fluidleitende Verbindung zwischen dem Pumpenanschluss und dem Tankanschluss geschaffen, so dass ein Umlaufdruck über das Vorspannventil freigegeben wird. Während das Druckbegrenzungsventil nach der Freigabe des Umlaufdruckes durch den Steuerschieber wieder schließt, verbleiben der Steuerschieber und das Vorspannventil in geöffneter Stellung. Die Ableitung des Umlaufdrucks über das geöffnete Vorspannventil, welches unabhängig von der anschließenden Schaltstellung des Druckbegrenzungsventils durch den Steuerschieber offengehalten wird, hat den Vorteil, dass im Betrieb des Anbaugerätes auftretende Schwingungen im Hydraulikkreislauf vermieden oder zumindest gedämpft werden.

Bevorzugt ist vorgesehen, dass in geschlossener Stellung des Abschaltventils die fluidleitende Verbindung zwischen dem Pumpenanschluss und dem Tankanschluss durch das Druckbegrenzungsventil und den Steuerschieber getrennt ist. Das vorsteuerbare Druckbegrenzungsventil hält das Abschaltventil in einer geschlossenen Stellung, in welcher die Verbindung von Pumpenanschluss und Tankanschluss durch das Druckbegrenzungsventil und den Steuerschieber unterbrochen ist. Das Auftreten einer Überlast in dem Hydraulikkreislauf führt zu einer Ansteuerung zunächst nur des Druckbegrenzungsventils, wodurch der Steuerschieber des Abschaltventils in eine geöffnete Position überführbar ist, während das Vorspannventil geschlossen ist.

Bevorzugt weist der Steuerschieber eine erste Steuerkante auf, welche eine Verbindung zwischen einem Druckraum des Druckbegrenzungsventils in Abhängigkeit von einer Verfahrstellung eines Schiebers des Druckbegrenzungsventils mit einer Stirnseite des Steuerschiebers freigibt. Das Öffnen des Druckbegrenzungsventils bewirkt, dass die Stirnseite des Steuerschiebers mit einem pumpenseitigen Druck beaufschlagt werden kann. Dies dient der Voransteuerung des Abschaltventils durch das Druckbegrenzungsventil.

Insbesondere ist ein von dem Steuerschieber begrenzter Druckraum in geöffneter Stellung des Abschaltventils durch eine Kanalführung mit dem Pumpenanschluss verbunden. Auf diese Weise kann auf der Stirnseite des Steuerschiebers der Druck aufrechterhalten werden, wenn das Druckbegrenzungsventil nach dem Öffnen des Vorspannventils wieder schließt. Es kann ein Umlaufdruck über die Kanalführung zur Stirnseite des Steuerschiebers geleitet werden. Durch eine Verbindung zwischen dem von dem Steuerschieber begrenzten Druckraum und dem Druckraum des Druckbegrenzungsventils stellt sich an dem Schieber des vorsteuerbaren Druckbegrenzungsventils ein Druckgleichgewicht ein, so dass das Druckbegrenzungsventil aufgrund einer voreinstellbaren Druckkraft einer Druckfeder geschlossen wird.

Weiterhin weist der Steuerschieber eine zweite Steuerkante auf, welche in Abhängigkeit von einer Verfahrstellung des Steuerschiebers eine Verbindung zwischen dem Pumpenanschluss und dem Tankanschluss freigibt. Die Druckbeaufschlagung des Vorspannventils mit dem pumpenseitigen Druck führt zu dessen Öffnen, wodurch der Umlauf von der Pumpe zum Tank erreicht wird.

Bevorzugt kann das Ansprechverhalten des Druckbegrenzungsventils durch ein Einstellmittel einstellbar sein. Dabei kann das Einstellmittel bevorzugt als eine Einstellschraube ausgebildet sein. Die Einstellschraube kann mit einem Anschlag versehen sein.

Des Weiteren kann der Steuerschieber eine Durchgangsbohrung aufweisen, die einen Kanal vom Druckbegrenzungsventil mit dem Tankanschluss verbindet, wobei eine Blende in der Durchgangsbohrung angeordnet ist. Durch die Blende im Steuerschieber kann der Volumenstrom begrenzt werden, der aufgrund von Leckage durch die Durchgangsbohrung in dem Steuerschieber von dem Druckraum in den Kanal zu dem Tankanschluss gelangen kann.

Gemäß einer bevorzugten Weiterbildung können das Vorspannventil und das Druckbegrenzungsventil in einem gemeinsamen Gehäuse des Abschaltventils angeordnet sein. Hierdurch wird eine kompakte Bauform erreicht.

Weiterhin wird zu Lösung der Aufgabe ein Anbaugerät für eine landwirtschaftliche Arbeitsmaschine gemäß dem Anspruch 9 vorgeschlagen.

Gemäß dem Anspruch 9 wird ein Anbaugerät für eine landwirtschaftliche Arbeitsmaschine vorgeschlagen, mit einem Hydraulikkreislauf, in dem zumindest eine Hydraulikpumpe und zumindest ein das Anbaugerät antreibender Hydraulikmotor angeordnet sind, wobei in dem Hydraulikkreislauf zumindest ein Abschaltventil angeordnet ist, welches einen Steuerschieber umfasst, der durch einen Kraftspeicher, insbesondere eine Druckfeder, in einer Position gehalten ist, in der ein Pumpenanschluss und ein Tankanschluss getrennt sind, wobei das Absperrventil ansteuerbar ist, um den Hydraulikkreislauf bei Bedarf kurzzuschließen, dadurch gekennzeichnet, dass das Abschaltventil nach einem der vorangehenden Patentansprüche ausgebildet ist.

Dabei kann das Anbaugerät hydraulisch angetriebene Komponenten aufweisen, die lösbar an dem Anbaugerät angeordnet sind. Das Abschaltventil ermöglicht einen Umlauf des Hydraulikfluides, wenn die hydraulisch angetriebenen Komponenten demontiert wurden. Dabei können Schwingungen in dem Hydraulikkreislauf zumindest gedämpft werden.

Insbesondere kann das Anbaugerät als ein Schneidwerk mit einer hydraulisch angetriebenen, sich im Wesentlichen über die Breite des Schneidwerkes erstreckenden Mähvorrichtung ausgeführt sein, an welchem seitlich Trennmesser anbringbar sind, welche im Wesentlichen in vertikaler Richtung orientiert sind, die durch den zumindest einen Hydraulikmotor antreibbar sind.

Die vorliegende Erfindung wird nachstehend anhand eines in den Zeichnungen dargestellten Ausführungsbeispieles näher erläutert.

Es zeigen:
- Fig. 1: eine schematische Darstellung eines Hydraulikkreislaufs eines Anbaugerätes einer landwirtschaftlichen Arbeitsmaschine;
- Fig. 2: eine schematische Darstellung eines Abschaltventils in einer geschlossenen Stellung;
- Fig. 3: eine schematische Darstellung des Abschaltventils in einer sich öffnenden Stellung;
- Fig. 4: eine schematische Darstellung des Abschaltventils in geöffneter Stellung.

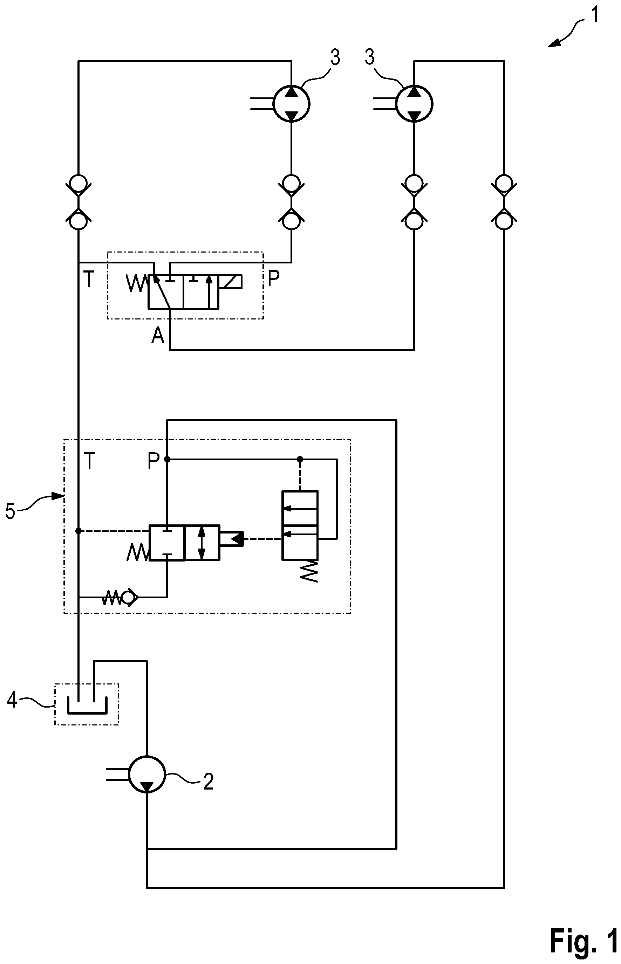

In Fig. 1 ist eine schematische Darstellung eines Hydraulikkreislaufs 1 eines Anbaugerätes einer landwirtschaftlichen Arbeitsmaschine gezeigt. Das Anbaugerät kann als ein Schneidwerk mit einer hydraulisch angetriebenen, sich im Wesentlichen über die Breite des Schneidwerkes erstreckenden Mähvorrichtung ausgeführt sein, an welchem seitlich Trennmesser anbringbar sind, welche im Wesentlichen vertikal zur Mähvorrichtung orientiert sind. Der Hydraulikkreislauf 1 umfasst zumindest eine Hydraulikpumpe 2, beispielsweise eine Zahnradpumpe, welche durch Zuleitungen mit Hydraulikmotoren 3 verbunden ist. Die Hydraulikmotoren 3 dienen dem Antrieb von an dem Anbaugerät lösbar angeordneten, hydraulisch angetriebenen Komponenten, wie den Trennmessern. Weiterhin umfasst der Hydraulickreislauf einen Tank 4 sowie ein Abschaltventil 5. Das Abschaltventil 5 dient dazu, bei demontierten Komponenten oder bei einer Überlast im Fall einer Störung Beschädigungen unter anderem von Hydraulikpumpe 2 und Hydraulikmotoren 3 zu verhindern, indem der Hydraulikkreislauf 1 durch Ansteuerung des Abschaltventils 5 kurzgeschlossen wird, d.h. eine unmittelbare fluidleitende Verbindung zwischen der zumindest einen Hydraulikpumpe 2 und dem Tank 4 geschaffen wird.

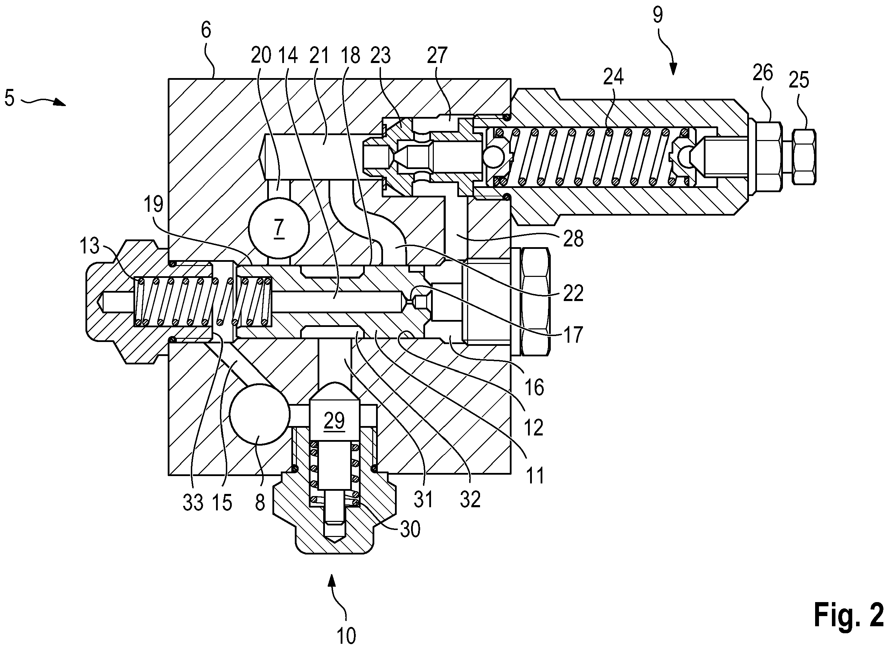

In Fig. 2 ist eine schematische Darstellung des erfindungsgemäßen Abschaltventils 5 in einer geschlossenen Stellung gezeigt. Das Abschaltventil 5 weist ein Ventilgehäuse 6 auf, welches über einen Pumpenanschluss 7 und einen Tankanschluss 8 verfügt. Weiterhin umfasst das Abschaltventil 5 ein vorsteuerbares Druckbegrenzungsventil 9, ein Vorspannventil 10 sowie einen Steuerschieber 11. Das Druckbegrenzungsventil 9 kann als separates Bauteil ausgeführt sein.

Der Steuerschieber 11 ist in einer Bohrung 12 in dem Ventilgehäuse 6 angeordnet. Ein als Druckfeder 13 ausgeführter Kraftspeicher hält den Steuerschieber 11 in einer Position, in welcher der Pumpenanschluss 7 und der Tankanschluss 8 voneinander getrennt sind. Der Steuerschieber 11 weist eine Durchgangsbohrung 14 auf, die einen von dem Steuerschieber 11 begrenzten Druckraum 16 mit einem Kanal 15, der zu dem Tankanschluss 8 führt, verbindet. Eine Blende 17 im Steuerschieber 11 begrenzt den Volumenstrom, der aufgrund von Leckage durch die Durchgangsbohrung 14 in dem Steuerschieber 11 von dem Druckraum 16 in den Kanal 15 zu dem Tankanschluss 8 gelangen kann. An dem Steuerschieber 11 sind eine erste Steuerkante 18 und eine zweite Steuerkante 19 vorgesehen, auf deren Funktion nachstehend näher eingegangen wird.

Von dem Pumpenanschluss 7 geht ein Kanal 20 ab, welche in eine Bohrung 21 mündet. Von der Bohrung 21 zweigt eine Kanalführung 22 ab, durch welche der Druckraum 16 mit dem Pumpenanschluss 7 in Abhängigkeit von der Schaltstellung des Steuerschiebers 11 verbindbar ist. Die Bohrung 21 wird von einem Schieber 23 des Druckbegrenzungsventil 9 begrenzt. In der dargestellten geschlossenen Stellung des Druckbegrenzungsventils 9 liegt der Schieber 23 an einer die Bohrung 21 in Umfangsrichtung begrenzenden Wand an. Ein als Druckfeder 24 ausgeführter Kraftspeicher des Druckbegrenzungsventils 9 hält den Schieber 23 in seiner die Bohrung verschließenden Stellung. Die von der Druckfeder 24 auf den Schieber 23 des Druckbegrenzungsventils 9 ausgeübte Druckkraft ist durch ein als Einstellschraube 25 ausgeführtes Einstellmittel einstellbar. Der Verstellweg der Einstellschraube 25 wird durch einen Anschlag 26 begrenzt. Ein im rückwärtigen Bereich des Schiebers 23 befindlicher Druckraum 27 ist durch einen Kanal 28 mit dem Druckraum 16 verbunden. Die erste Steuerkante 18 verschließt die Kanalführung 22. Die zweite Steuerkante 19 verschließt den Kanal 20. Die erste Steuerkante 18 des Steuerschiebers 11 gibt eine Verbindung zwischen dem Druckraum 27 des Druckbegrenzungsventils 9 in Abhängigkeit von einer Verfahrstellung des Schiebers 23 des Druckbegrenzungsventils 9 mit einer Stirnseite des Steuerschiebers 11 frei. Die zweite Steuerkante 19 des Steuerschiebers 11 gibt in Abhängigkeit von einer Verfahrstellung des Steuerschiebers 11 eine Verbindung zwischen dem Pumpenanschluss 7 und dem Tankanschluss 8 frei.

Das Vorspannventil 10 umfasst einen Kolben 29, welcher durch eine Druckfeder 30 mit einer definierten Kraft beaufschlagt wird. Der Kolben 29 verschließt eine Bohrung 31, durch welche ein im Wesentlichen kreisringförmigen Raum 32 in der Bohrung 12 mit dem Tankanschluss 8 verbindbar ist.

In der geschlossenen Stellung des Abschaltventils 5 liegt an dem Druckbegrenzungsventil 9 ein pumpenseitiger Druck an, welcher von der Hydraulikpumpe 2 bereitgestellt wird, der die voreingestellte Druckkraft der Druckfeder 24 des Druckbegrenzungsventils 9 nicht überschreitet. Im Druckraum 27 stellt sich somit ein Druck ein, der dem tankseitigen Druck entspricht. In geschlossener Stellung des Abschaltventils 5 ist die fluidleitende Verbindung zwischen dem Pumpenanschluss 7 und dem Tankanschluss 8 durch das Druckbegrenzungsventil 9 und den Steuerschieber 11 getrennt.

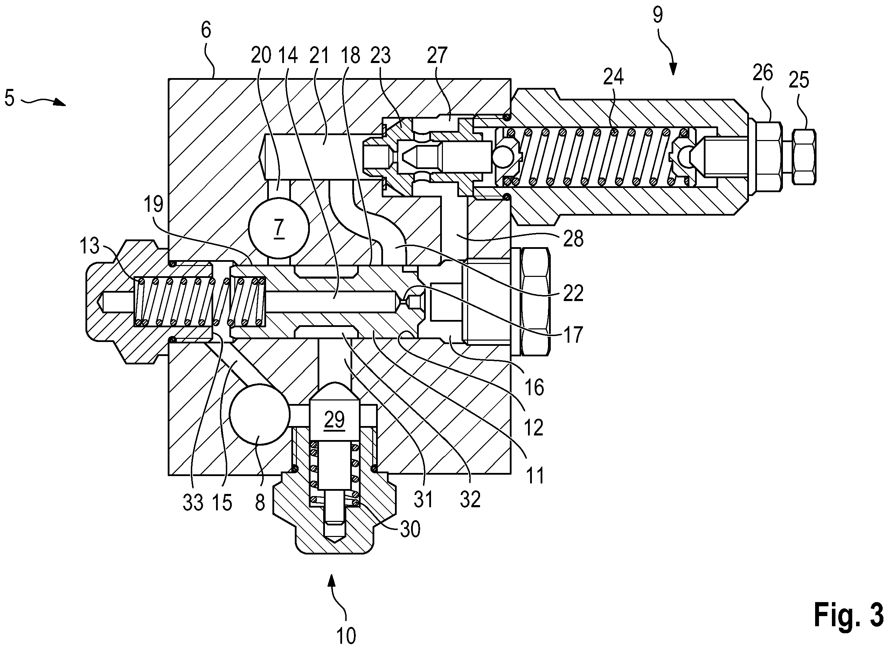

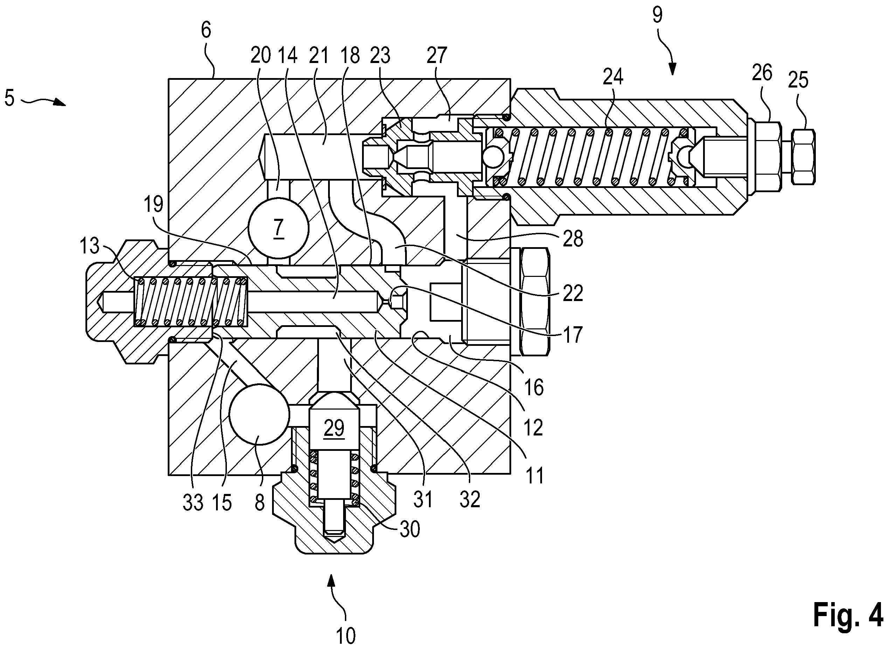

Unter Bezugnahme auf die Fig. 3 und 4 wird nachstehend erläutert, wie das Abschaltventil 5 angesteuert wird, wenn die hydraulisch angetriebenen Komponenten, wie beispielsweise die Trennmesser, demontiert wurden bzw. eine Überlast im Hydraulikkreislauf 1 im Fall einer Störung auftritt. In beiden Fällen ist die Funktionsweise des Abschaltventils 5 gleich. Durch die Ansteuerung des Abschaltventils 5 soll ein druckloser Umlauf des Hydraulikfluides zwischen der Hydraulikpumpe 2 und dem Tank 4 erreicht werden.

In Fig. 3 ist eine schematische Darstellung des Abschaltventils 5 in einer sich öffnenden Stellung gezeigt. Durch die Demontage der hydraulisch angetriebenen Komponenten ist es nicht weiter erforderlich, dass die Hydraulikmotoren 3 durch die Hydraulikpumpe 2 gespeist werden. Eine Zunahme des auf den Schieber 23 des Druckbegrenzungsventils 9 pumpenseitig ausgeübten Drucks führt dazu, dass dieser entgegen der Druckkraft der Druckfeder 24 axial verschoben wird. Dadurch wird der Kanal 28, welcher den Druckraum 27 des Druckbegrenzungsventils 9 mit dem Druckraum 16 des Steuerschiebers 11 verbindet, geöffnet. Über das Druckbegrenzungsventil 9 gelangt das von der Hydraulikpumpe 2 mit hohem Druck geförderte Hydraulikfluid in den Druckraum 16 und beaufschlagt die Stirnseite des Steuerschiebers 11. Dadurch wird der Steuerschieber 11 entgegen der Druckkraft der Druckfeder 13 in Richtung eines Anschlags 33 gedrückt. Durch die axiale Verschiebung des Steuerschiebers 11 des Abschaltventils 5 öffnet die erste Steuerkante 18 die Verbindung zu der Kanalführung 22, so dass das über das Druckbegrenzungsventil 9 strömende Hydraulikfluid auf die Stirnseite des Steuerschiebers 11 gelangt.

In Fig. 4 ist eine schematische Darstellung des Abschaltventils 5 in geöffneter Stellung gezeigt. Durch das mit pumpenseitigen Druck beaufschlagte Hydraulikfluid auf der Stirnseite des Steuerschiebers 11 wird dieser gegen den Anschlag 33 gedrückt und gehalten, solange ein durch die Hydraulikpumpe 2 bereitgestellter Volumenstrom des Hydraulikfluides anliegt. Die zweite Steuerkante 19 des Steuerschiebers 11 öffnet die Verbindung zu dem Kanal 20. Dadurch besteht eine fluidleitende Verbindung zwischen dem Kanal 20 und dem Raum 32, welcher durch die Bohrung 31 mit dem Tankanschluss 8 verbunden ist. Das Hydraulikfluid gelangt vom Pumpenanschluss 7 durch den Kanal 20 in den Raum 32 sowie durch die Kanalführung 22 in den Druckraum 16. Von dem Druckraum 16 gelangt das Hydraulikfluid durch den Kanal 28 in den Druckraum 27 des Druckbegrenzungsventiles 9. Dadurch steht auf beiden Seiten des Schiebers 23 der gleiche Druck an, so dass die voreingestellte Druckkraft der Druckfeder 24 das Druckbegrenzungsventil 9 in seine geschlossene Schaltstellung überführt.

Zugleich bewirkt der auf den Kolben 29 des Vorspannventils 10 ausgeübte Druck dessen Verschiebung entgegen der Druckkraft der Druckfeder 30, wodurch die bislang geschlossene fluidleitende Verbindung zwischen der Bohrung 31 und dem Tankanschluss 8 geöffnet wird. Das durch den Pumpenanschluss 7 zugeführte Hydraulikfluid strömt über das Vorspannventil 10 zu dem Tankanschluss 8. Dabei wird die stirnseitige Druckbeaufschlagung des Steuerschieber 11 über die Kanalführung 22 aufrechterhalten.

Mit dem Unterbrechen des durch den Pumpenanschluss 7 zugeführten Volumenstroms durch die Abschaltung der Hydraulikpumpe 2 wird der Steuerschieber 11 wieder in die geschlossene Schaltstellung des Abschaltventiles gemäß Fig. 2 überführt, in welcher die erste Steuerkante 18 und die zweite Steuerkante 19 die Kanalführung 22 und den Kanal 20 verschießen.

**Bezugszeichenliste**

| | | | |
|---|---|---|---|
| 1 | Hydraulikkreislauf | 31 | Bohrung |
| 2 | Hydraulikpumpe | 32 | Raum |
| 3 | Hydraulikmotor | 33 | Anschlag |
| 4 | Tank | | |
| 5 | Abschaltventil | | |
| 6 | Ventilgehäuse | | |
| 7 | Pumpenanschluss | | |
| 8 | Tankanschluss | | |
| 9 | Druckbegrenzungsventil | | |
| 10 | Abschaltventil | | |
| 11 | Steuerschieber | | |
| 12 | Bohrung | | |
| 13 | Druckfeder | | |
| 14 | Durchgangsbohrung | | |
| 15 | Kanal | | |
| 16 | Druckraum | | |
| 17 | Blende | | |
| 18 | Erste Steuerkante | | |
| 19 | Zweite Steuerkante | | |
| 20 | Kanal | | |
| 21 | Bohrung | | |
| 22 | Kanalführung | | |
| 23 | Schieber | | |
| 24 | Druckfeder | | |
| 25 | Einstellschraube | | |
| 26 | Anschlag | | |
| 27 | Druckraum | | |
| 28 | Kanal | | |
| 29 | Kolben | | |
| 30 | Druckfeder | | |

## Patentansprüche

1. Abschaltventil (5) für ein hydraulisch angetriebenes Anbaugerät einer landwirtschaftlichen Arbeitsmaschine, wobei das Abschaltventil (5) in einem Hydraulikkreislauf (1) zwischen zumindest einer Hydraulikpumpe (2) und zumindest einem das Anbaugerät antreibenden Hydraulikmotor (4) angeordnet ist, wobei das Abschaltventil (5) einen Steuerschieber (11) umfasst, der durch einen Kraftspeicher, insbesondere eine Druckfeder (13), in einer Position gehalten ist, in der ein Pumpenanschluss (7) und ein Tankanschluss (8) getrennt sind, wobei das Absperrventil (5) ansteuerbar ist, um den Hydraulickreislauf (1) bei Bedarf kurzzuschließen, **dadurch gekennzeichnet, dass** das Abschaltventil (5) ein Vorspannventil (10) und ein, insbesondere separates, Druckbegrenzungsventil (9) aufweist, wobei das Abschaltventil (5) über das Druckbegrenzungsventil (9) vorsteuerbar ist und mittels des Vorspannventils (10) in einer geöffneten Position haltbar ist.

2. Abschaltventil (5) nach Anspruch 1, **dadurch gekennzeichnet, dass** in geschlossener Stellung des Abschaltventils (5) die fluidleitende Verbindung zwischen dem Pumpenanschluss (7) und dem Tankanschluss (8) durch das Druckbegrenzungsventil (9) und den Steuerschieber (11) getrennt ist.

3. Abschaltventil (5) nach Anspruch 1 oder 2, **dadurch gekennzeichnet, dass** der Steuerschieber (11) eine erste Steuerkante (18) aufweist, welche eine Verbindung zwischen einem Druckraum (27) des Druckbegrenzungsventils (9) in Abhängigkeit von einer Verfahrstellung eines Schiebers (23) des Druckbegrenzungsventils (9) mit einer Stirnseite des Steuerschiebers (11) freigibt.

4. Abschaltventil (5) nach einem der vorangehenden Ansprüche, **dadurch gekennzeichnet, dass** ein von dem Steuerschieber (11) begrenzter Druckraum (16) in geöffneter Stellung des Abschaltventils (5) durch eine Kanalführung (22) mit dem Pumpenanschluss (7) verbunden ist.

5. Abschaltventil (5) nach einem der vorangehenden Ansprüche, **dadurch gekennzeichnet, dass** der Steuerschieber (11) eine zweite Steuerkante (19) aufweist, welche in Abhängigkeit von einer Verfahrstellung des Steuerschiebers (11) eine Verbindung zwischen dem Pumpenanschluss (7) und dem Tankanschluss (8) freigibt.

6. Abschaltventil (5) nach einem der vorangehenden Ansprüche, **dadurch gekennzeichnet, dass** das Ansprechverhalten des Druckbegrenzungsventils (9) durch ein Einstellmittel (25) einstellbar ist.

7. Abschaltventil (5) nach einem der vorangehenden Ansprüche, **dadurch gekennzeichnet, dass** der Steuerschieber (11) eine Durchgangsbohrung (14) aufweist, die einen Kanal (28) vom Druckbegrenzungsventil (9) mit dem Tankanschluss verbindet, wobei eine Blende (17) in der Durchgangsbohrung (14) angeordnet ist.

8. Abschaltventil (5) nach einem der vorangehenden Ansprüche, **dadurch gekennzeichnet, dass** das Vorspannventil (10) und das Druckbegrenzungsventil (9) in einem gemeinsamen Gehäuse (6) des Abschaltventils (5) angeordnet sind.

9. Anbaugerät für eine landwirtschaftliche Arbeitsmaschine, mit einem Hydraulickreislauf (1), in dem zumindest eine Hydraulikpumpe (2) und zumindest ein das Anbaugerät antreibender Hydraulikmotor (3) angeordnet sind, wobei in dem Hydraulikkreislauf (1) zumindest ein Abschaltventil (5) angeordnet ist, welches einen Steuerschieber (11) umfasst, der durch einen Kraftspeicher, insbesondere eine Druckfeder (13), in einer Position gehalten ist, in der ein Pumpenanschluss (7) und ein Tankanschluss (8) getrennt sind, wobei das Absperrventil (5) ansteuerbar ist, um den Hydraulikkreislauf (1) bei Bedarf kurzzuschließen, **dadurch gekennzeichnet, dass** das Abschaltventil (5) nach einem der vorangehenden Patentansprüche ausgebildet ist.

10. Anbaugerät nach Anspruch 9, **dadurch gekennzeichnet, dass** das Anbaugerät hydraulisch angetriebene Komponenten aufweist, die lösbar an dem Anbaugerät angeordnet sind.

11. Anbaugerät nach Anspruch 9 oder 10, **dadurch gekennzeichnet, dass** das Anbaugerät als ein Schneidwerk mit einer hydraulisch angetriebenen, sich im Wesentlichen über die Breite des Schneidwerkes erstreckenden Mähvorrichtung ausgeführt ist, an welchem seitlich Trennmesser anbringbar sind, welche im Wesentlichen in vertikaler Richtung orientiert sind, die durch den zumindest einen Hydraulikmotor (3) antreibbar sind.
